# EUROPEAN PATENT SPECIFICATION

(11) **EP 2 770 253 B1**
(45) Date of publication and mention of the grant of the patent: **04.05.2016**
(21) Application number: 14156329.6
(22) Date of filing: 24.02.2014
(51) Int. Cl.: F21V 29/00, F28D 15/02, F21V 29/76, F21Y 115/10

(54) **Heat radiation apparatus for LED lighting**
Wärmestrahlungsvorrichtung für LED-Beleuchtung
Appareil de rayonnement de chaleur pour éclairage à DEL

(30) Priority: 26.02.2013 JP 2013035517; 01.11.2013 JP 2013228098; 13.12.2013 JP 2013258064
(43) Date of publication of application: 27.08.2014
(73) Proprietor: Showa Denko K.K., Tokyo 105-8518 (JP)
(72) Inventor: Sasaki, Hironaka, Tochigi, 323-8678 (JP); Taga, Kazuo, Tochigi, 323-8678 (JP)
(74) Representative: Hoffmann Eitle

(56) References cited:
- EP-A2- 0 696 160
- US-A- 5 076 350
- US-A1- 2003 056 942

## Description

### BACKGROUND OF THE INVENTION

### Field of the Invention

The present invention relates to a heat radiation apparatus for radiating heat generated from a power supply or an LED used as a light source in an LED lighting unit which is used in a lighting apparatus for raising plants in a plant cultivation factory or other lighting apparatuses such as a searchlight for construction sites.

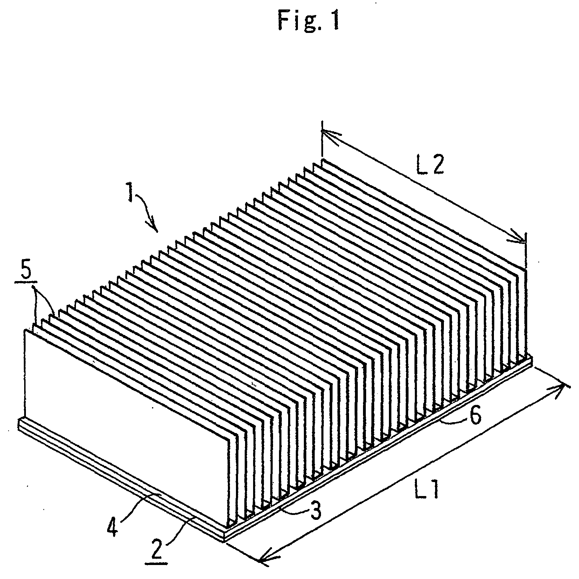

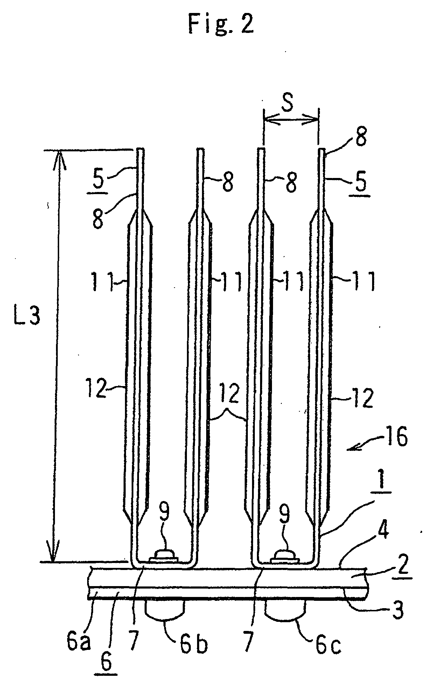

In the present specification and appended claims, the upper and lower sides of Figs. 1 and 2 will be referred to as "upper" and "lower," respectively.

### Description of the Related Art

An LED lighting unit which includes an LED as a light source has excellent characteristics; i.e., is higher in luminous efficiency, lower in power consumption, and brighter than conventional incandescent lamps or the like. However, LED lighting units according to the current technique have problems in that about 80% of consumed power becomes heat, and that a resin material surrounding an LED deteriorates due to heat, whereby luminous efficiency decreases, and service life becomes shorter. Such problems become remarkable, in particular, in the case of high power LED lighting units whose power consumptions are 100 W or greater.

A widely known, typical heat radiation apparatus (hereinafter referred to as a "known heat radiation apparatus") includes a heat generation body mounting plate which is formed of a thermally conductive material, whose one side serves as a heat generation body mounting surface to which a heat generation body is mounted, and whose other side is a flat heat transfer surface; and a plurality of parallel heat radiation fins integrally provided on the heat transfer surface of the heat generation body mounting plate such that the heat radiation fins are spaced from one another.

Incidentally, such an LED lighting unit is often provided so as to light up an area below the lighting unit. In such a case, the heat generation body mounting plate of the above-mentioned, known heat radiation apparatus assumes a horizontal attitude, and an LED lighting unit is attached to the lower surface of the heat generation body mounting plate. However, in the case where the LED lighting unit is used in such a state, natural convection fails to supply a sufficient amount of cool air to a central portion of each heat radiation fin with respect to the longitudinal direction thereof. Therefore, in each heat radiation fin, the central position and the vicinity thereof become higher in temperature than other portions. Accordingly, the amount of heat radiated from the central portion of each heat radiation fin and from a region around the central portion decreases, which makes it difficult to effectively radiate the heat generated from the entire LED lighting unit disposed on the heat generation body mounting surface of the heat generation body mounting plate.

In order to overcome the above-mentioned drawback, there have been conceived heat radiation apparatuses which utilize heat pipes which are excellent in heat transfer performance. For example, a heat radiation apparatus for LED lighting which utilizes heat pipes has been proposed (see Japanese Patent Application Laid-Open (kokai) No. 2012-4126). The proposed heat radiation apparatus includes a heat spreader which has a horizontal strip portion supporting a plurality of LED lighting units mounted on the upper surface thereof and a vertical strip portion integrally formed along the entire long side of the horizontal strip portion such that the vertical strip portion projects downward; a vertical heat radiation plate disposed such that it is spaced from the outer surface of the vertical strip portion of the heat spreader; a heat radiation body which thermally connects the vertical heat radiation plate and the vertical strip portion of the heat spreader together; and a first heat pipe which is fixedly disposed in a region between the horizontal strip portion and the vertical strip portion of the heat spreader in a state in which the first heat pipe is in thermal contact with the two strip portions and the longitudinal direction of the first heat pipe coincides with the longitudinal direction of the two strip portions. The heat radiation body is composed of second heat pipes extending straight in the vertical direction, generally U-shaped third pipes, and generally L-shaped fourth heat pipes. The straight second pipes are disposed at predetermined intervals in the longitudinal direction of the heat spreader, and lower portions of the second pipes are fixedly held between the vertical heat radiation plate and the vertical strip portion of the heat spreader. Each of the generally U-shaped third heat pipes is disposed between adjacent second heat pipes, and a lower portion thereof is fixedly held between the vertical heat radiation plate and the vertical strip portion of the heat spreader. The generally L-shaped fourth heat pipes are disposed outward of the second heat pipes at opposite ends, and their lower ends are fixedly held between the vertical heat radiation plate and the vertical strip portion of the heat spreader. The containers of the second through fourth heat pipes have a flattened shape.

In the heat radiation apparatus disclosed in the above-mentioned publication, the heat generated from the LED lighting unit is transferred to the first heat pipe, whereby the temperature of the heat spreader is rendered uniform in the longitudinal direction. The heat transferred to the heat spreader is transferred from the vertical strip portion to the entirety of the heat radiation plate via the second through fourth heat pipes, and the heat is radiated from the heat radiation plate.

However, in the case of the heat radiation apparatus disclosed in the above-mentioned publication, the first through fourth heat pipes are required in addition to the heat spreader and the heat radiation plate, and it is necessary to fix the heat spreader and the first through fourth heat pipes and to fix the heat radiation plate and the second through fourth heat pipes. Therefore, the heat radiation apparatus has problems in that the number of parts increases and that assembly work becomes troublesome. EP 0 696 160 A2 shows a cooling device for electrical or electronic components having a heat sink with a number of parallel cooling ribs extending from a base plate.

### SUMMARY OF THE INVENTION

An object of the present invention is to solve the above-mentioned problem and to provide a heat radiation apparatus for LED lighting which has sufficiently high heat radiation performance, requires a smaller number of parts as compared with the heat radiation apparatus disclosed in the above-mentioned publication, and which can be readily assembled.

To fulfill the above object, the present invention comprises the following modes.
1) A heat radiation apparatus for LED lighting, comprising an LED lighting unit mounting plate which is formed of a thermally conductive material and which has a lighting unit mounting surface to which an LED lighting unit is mounted and a flat heat transfer surface; and a plurality of heat radiation fins disposed on the heat transfer surface of the LED lighting unit mounting plate, wherein each of the heat radiation fins has a base portion and a heat radiation portion integrally provided on the base portion such that the heat radiation portion extends upward from the base portion; the plurality of heat radiation fins are fixed to the LED lighting unit mounting plate such that the heat radiation portions are spaced from one another; and a hollow operation fluid storing circuit is formed in the heat radiation portion of each heat radiation fin, and an operation fluid is charged into the operation fluid storing circuit, whereby a heat pipe portion is provided at the heat radiation portion.
2) A heat radiation apparatus for LED lighting according to par. 1), wherein the base portion of each heat radiation fin has a rectangular shape and a flat surface facing toward the LED lighting unit mounting plate, the heat radiation portion is provided at at least one of two long sides of the base portion, and each heat radiation fin is fixed to the LED lighting unit mounting plate by a fixture which penetrates the base portion of the heat radiation fin.
3) A heat radiation apparatus for LED lighting according to par. 2), wherein the heat radiation portion of each heat radiation fin is provided at each of the two long sides of the base portion, and the heat radiation fin has a U-like shape as a whole.
4) A heat radiation apparatus for LED lighting according to par. 3), wherein the two heat radiation portions of each heat radiation fin have heat pipe portions which are independent of each other.
5) A heat radiation apparatus for LED lighting according to par. 4), wherein each heat radiation fin is formed by bending, into a U-like shape, a substrate manufactured by laminating and joining two metal plates, and the operation fluid storing circuit of the heat pipe portion of each heat radiation portion is provided by bulging outward at least one of the two metal plates which form the substrate.
6) A heat radiation apparatus for LED lighting according to par. 3), wherein the two heat radiation portions of each heat radiation fin have heat pipe portions, and the operation fluid storing circuits of the heat pipe portions of the two heat radiation portions communicate with each other through a hollow communication portion provided at the base portion.
7) A heat radiation apparatus for LED lighting according to par. 6), wherein each heat radiation fin is formed by bending, into a U-like shape, a substrate manufactured by laminating and joining two metal plates, the operation fluid storing circuit of the heat pipe portion of each heat radiation portion is provided by bulging outward at least one of the two metal plates which form the substrate, and the hollow communication portion of the base portion is provided by bulging only one of the metal plates which form the substrate in a direction opposite the LED lighting unit mounting plate.
8) A heat radiation apparatus for LED lighting according to par. 3), wherein the spacing between the two heat radiation portions of each heat radiation fin is 7 mm or greater.
9) A heat radiation apparatus for LED lighting according to par. 2), wherein the long sides of the base portion of each heat radiation fin have a length of 200 mm or greater, the heat radiation portion is provided over the entire length of the long side of the base portion, and a straight distance between the base portion and a distal end of the heat radiation portion is 50 mm or greater.
10) A heat radiation apparatus for LED lighting according to par. 9), wherein a dimension of the LED lighting unit mounting plate in a direction orthogonal to a longitudinal direction of the base portion of each heat radiation fin is 200 mm or greater.
11) A heat radiation apparatus for LED lighting according to par. 1), wherein a plurality of fin mounting grooves are provided on the heat transfer surface of the LED lighting unit mounting plate such that the mounting grooves are spaced from one another, each heat radiation fin is fixed to the LED lighting unit mounting plate in a state in which the heat pipe portion is located outside the corresponding fin mounting groove, and the base portion and a part of the heat radiation portion near the base portion are fitted into the fin mounting groove.
12) A heat radiation apparatus for LED lighting according to par. 11), wherein the base portion of each heat radiation fin is in contact with a bottom surface of the corresponding fin mounting groove, and a part of the heat radiation portion of the heat radiation fin fitted into the fin mounting groove is in contact with a side surface of the fin mounting groove.
13) A heat radiation apparatus for LED lighting according to par. 11), wherein the plurality of concave grooves are formed by depressing the heat transfer surface of the LED lighting unit mounting plate such that the concave grooves become parallel to one another, and each concave grove serves as a fin mounting groove.
14) A heat radiation apparatus for LED lighting according to par. 11), wherein a plurality of ridge pairs each composed of two upward projecting ridges are provided at predetermined intervals on the heat transfer surface of the LED lighting unit mounting plate such that all the ridges become parallel to one another, and the two ridges of each ridge pair and a portion of the LED lighting unit mounting plate located between the two ridges of that ridge pair form a fin mounting groove.
15) A heat radiation apparatus for LED lighting according to par. 14), wherein the total thickness of a part of the heat radiation portion of each heat radiation fin, which part is fitted into the corresponding fin mounting groove, and the corresponding ridge of the fin mounting groove is 1.5 mm or greater.
16) A heat radiation apparatus for LED lighting according to par. 11), wherein a plurality of groove forming members each of which has a U-shaped transverse cross section, which are formed separately from the LED lighting unit mounting plate by using a thermally conductive material, and which is composed of a flat plate and a pair of parallel ridges integrally provided at opposite side edges of the plate are fixed to the heat transfer surface of the LED lighting unit mounting plate at predetermined intervals such that all the ridges become parallel to one another, and the two ridges and flat plate of each groove forming member form a fin mounting groove.
17) A heat radiation apparatus for LED lighting according to par. 16), wherein the total thickness of a part of the heat radiation portion of each heat radiation fin, which part is fitted into the corresponding fin mounting groove, and the corresponding ridge of the fin mounting groove is 1.5 mm or greater.
18) A heat radiation apparatus for LED lighting according to par. 11), wherein the base portion of each heat radiation fin has a rectangular shape, the heat radiation portion is provided at each of two long sides of the base portion, whereby the heat radiation fin has a U-like shape as a whole, and parts of the two heat radiation portions near the base portion are fitted into the fin mounting groove.
19) A heat radiation apparatus for LED lighting according to par. 18), wherein convex portions extending in the front-rear direction are integrally provided on the two side surfaces of each fin mounting groove of the LED lighting unit mounting plate or surfaces of the parts of the two heat radiation portions of each heat radiation fin fitted into the fin mounting groove, the surfaces facing toward the outside of the fin mounting groove, and concave portions which extend in the front-rear direction and into which the convex portions are fitted are provided on the two side surfaces of the fin mounting groove or the surfaces of the parts of the two heat radiation portions on which the convex portions are not provided.
20) A heat radiation apparatus for LED lighting according to par. 18), wherein the two heat radiation portions of each heat radiation fin have heat pipe portions which are independent of each other.
21) A heat radiation apparatus for LED lighting according to par. 20), wherein each heat radiation fin is formed by bending, into a U-like shape, a substrate manufactured by laminating and joining two metal plates, and the operation fluid storing circuit of the heat pipe portion of each heat radiation portion is provided by bulging outward at least one of the two metal plates which form the substrate.
22) A heat radiation apparatus for LED lighting according to par. 18), wherein the spacing between the two heat radiation portions of each heat radiation fin is 7 mm or greater.
23) A heat radiation apparatus for LED lighting according to par. 18), wherein the long sides of the base portion of each heat radiation fin have a length of 200 mm or greater, the heat radiation portion is provided over the entire length of the long side of the base portion, and a straight distance between the base portion and a distal end of the heat radiation portion is 50 mm or greater.
24) A heat radiation apparatus for LED lighting according to par. 23), wherein a dimension of the LED lighting unit mounting plate in a direction orthogonal to a longitudinal direction of the base portion of each heat radiation fin is 200 mm or greater.
25) A lighting apparatus comprising a heat radiation apparatus for LED lighting according to any one of pars. 1) to 24), and a plurality of LEDs which are mounted on the lighting unit mounting surface of the LED lighting unit mounting plate of the heat radiation apparatus for LED lighting and which serve as a light source.
26) A lighting apparatus according to par. 25), wherein the LED lighting unit includes a circuit board, a plurality of blue LED packages disposed on the circuit board and each including a blue LED, a plurality of red LED packages disposed on the circuit board and each including a red LED, and a switching power supply for the LED packages, and the LED lighting unit is mounted to the lighting unit mounting surface of the LED lighting unit mounting plate such that each LED package is located right under the base portion of the corresponding heat radiation fin.

The heat radiation apparatuses for LED lighting of any one of pars. 1) to 24) comprises an LED lighting unit mounting plate which is formed of a thermally conductive material and which has a lighting unit mounting surface to which an LED lighting unit is mounted and a flat heat transfer surface; and a plurality of heat radiation fins disposed on the heat transfer surface of the LED lighting unit mounting plate, wherein each of the heat radiation fins has a base portion and a heat radiation portion integrally provided on the base portion such that the heat radiation portion extends upward from the base portion; the plurality of heat radiation fins are fixed to the LED lighting unit mounting plate such that the heat radiation portions are spaced from one another; and a hollow operation fluid storing circuit is formed in the heat radiation portion of each heat radiation fin, and an operation fluid is charged into the operation fluid storing circuit, whereby a heat pipe portion is provided at the heat radiation portion. Therefore, the entirety of an LED lighting unit which is mounted to the lighting unit mounting surface of the LED lighting unit mounting plate as will be described later can be cooled efficiently.

Namely, the heat generated from the LED lighting unit flows to the lighting unit mounting surface of the LED lighting unit mounting plate, and then flows to the heat radiation fins through the LED lighting unit mounting plate. The heat transferred to each heat radiation fin flows to the operation fluid in a lower region within the operation fluid storing circuit of the heat pipe portion of the heat radiation portion, whereby the operation fluid evaporates and becomes gas (gaseous phase). As a result, the pressure in the lower region within the operation fluid storing circuit increases, and the gaseous-phase operation fluid spreads over the entire operation fluid storing circuit. During a period during which the gaseous-phase operation fluid spreads over the entire operation fluid storing circuit, the heat carried by the gaseous-phase operation fluid flows to the heat radiation portion and is radiated from the heat radiation portion, whereby the gaseous-phase operation fluid from which heat has been removed condenses. As a result, the entirety of each heat radiation portion of each heat radiation fin has a uniform temperature, and heat is uniformly radiated from the entirety of each heat radiation portion. Meanwhile, since the liquid-phase operation fluid produced as a result of condensation flows downward due to the gravity, a flow of the gaseous-phase operation fluid and a flow of the liquid-phase operation fluid are produced in each heat pipe portion, whereby circulation of the operation fluid occurs. Therefore, the heat transferred from the entire LED lighting unit mounting plate is radiated uniformly, whereby the entire LED lighting unit disposed on the lighting unit mounting surface of the LED lighting unit mounting plate is cooled efficiently.

In addition, the heat pipe portion provided at the heat radiation portion of each heat radiation fin is formed by charging an operation fluid into the hollow operation fluid storing circuit provided in the heat radiation portion. Therefore, as compared with the heat radiation apparatus disclosed in the above-mentioned publication, the number of parts decreases, and manufacturing work becomes easier. According to the heat radiation apparatuses for LED lighting of any one of pars. 4) to 7), the heat radiation fins having the heat pipe portions provided at the heat radiation portions thereof can be manufactured relatively easily.

In the case where the heat radiation apparatus for LED lighting has dimensions described in pars. 8) to 10) and has a structure similar to that of the known heat radiation apparatus, it is difficult to effectively radiate the heat generated from the LED lighting unit mounted to the LED lighting unit mounting surface of the LED lighting unit mounting plate. Even in such a case, the heat radiation apparatus for LED lighting of par. 1) can efficiently cool the entirety of the LED lighting unit mounted to the LED lighting unit mounting surface of the LED lighting unit mounting plate.

According to the heat radiation apparatuses for LED lighting of par. 11), the heat generated from the LED lighting unit flows to each heat radiation fin through the part of the heat radiation portion of the heat radiation fin as well, which part is fitted into the corresponding fin mounting groove. Therefore, the heat generated from the LED lighting unit efficiently flows to each heat radiation fin, whereby the efficiency in cooling the LED lighting unit is improved.

In addition, in the case where the base portion of each heat radiation fin and a part of the heat radiation portion near the base portion are press-fitted into the fin mounting groove, the number of fixtures such as screws or rivets used for fixing the heat radiation fins to the LED lighting unit mounting plate can be decreased, and work of fixing the heat radiation fins becomes easier.

The heat radiation apparatuses for LED lighting of par. 12) is excellent in terms of transmission of heat from the LED lighting unit mounting plate to the heat radiation fins.

According to the heat radiation apparatuses for LED lighting of any one of pars. 13), 14), and 16), the fin mounting grooves can be formed on the heat transfer surface of the LED lighting unit mounting plate in a relatively simple manner.

According to the heat radiation apparatuses for LED lighting of par. 15) or 17), transfer of heat from the LED lighting unit mounting plate to the heat pipe portion of the heat radiation portion of each heat radiation fin is enhanced. Therefore, the LED lighting unit mounted to the lighting unit mounting surface of the LED lighting unit mounting plate can be cooled effectively.

According to the heat radiation apparatuses for LED lighting of par. 18), transfer of heat from the LED lighting unit mounting plate to the heat pipe portion of the heat radiation portion of each heat radiation fin is enhanced. Therefore, the LED lighting unit mounted to the lighting unit mounting surface of the LED lighting unit mounting plate can be cooled effectively.

According to the heat radiation apparatuses for LED lighting of par. 19), the convex portions and the concave portions prevent positional shift of each heat radiation fin in relation to the LED lighting unit mounting plate in a period before each heat radiation fin is fixed to the LED lighting unit mounting plate. In addition, since the convex portions and the concave portions are used for fixing each heat radiation fin to the LED lighting unit mounting plate, the number of fixtures (screws, rivets, or the like) used to fix each heat radiation fin to the LED lighting unit mounting plate can be decreased, and work of fixing the heat radiation fins becomes easier.

According to the heat radiation apparatuses for LED lighting of par. 20) or 21), the heat radiation fins having the heat pipe portions provided on the heat radiation portions thereof can manufactured relatively easily.

In the case where the heat radiation apparatus for LED lighting has dimensions described in pars. 22) to 24) and has a structure similar to that of the known heat radiation apparatus, it is difficult to effectively radiate the heat generated from the LED lighting unit mounted to the LED lighting unit mounting surface of the LED lighting unit mounting plate. Even in such a case, the heat radiation apparatus for LED lighting of par. 11) can efficiently cool the entirety of the LED lighting unit mounted to the LED lighting unit mounting surface of the LED lighting unit mounting plate.

According to the lighting apparatus of par. 25), the entirety of the LED lighting unit mounted to the LED lighting unit mounting surface of the LED lighting unit mounting plate can be cooled efficiently.

### BRIEF DESCRIPTION OF THE DRAWINGS

Fig. 1 is a perspective view showing the overall structure of a heat radiation apparatus for LED lighting according to the present invention;
Fig. 2 is an enlarged view of a portion of the heat radiation apparatus for LED lighting according to the present invention as viewed from a side where one longitudinal end of each heat radiation fin is located;
Fig. 3 is a perspective view showing a heat radiation fin used in the heat radiation apparatus for LED lighting of Figs. 1 and 2;
Fig. 4 is a front view showing a metal substrate used for manufacturing the heat radiation fin of Figs. 2 and 3;
Fig. 5 is a perspective view showing the manner of use of a lighting apparatus which includes the heat radiation apparatus for LED lighting of Fig. 1;
Fig. 6 is a view corresponding to Fig. 2 and showing a modification of the heat radiation fin used in the heat radiation apparatus for LED lighting of Figs. 1 and 2;
Fig. 7 is a perspective view showing the modification of the heat radiation fin used in the heat radiation apparatus for LED lighting of Figs. 1 and 2;
Fig. 8 is a front view showing a metal substrate used for manufacturing the heat radiation fin of Figs. 6 and 7;
Fig. 9 is a view corresponding to Fig. 2 and showing a first modification of an LED lighting unit mounting plate used in the heat radiation apparatus for LED lighting of Figs. 1 and 2;
Fig. 10 is a view corresponding to a portion of Fig. 2 and showing a second modification of the LED lighting unit mounting plate used in the heat radiation apparatus for LED lighting of Figs. 1 and 2;
Fig. 11 is an exploded view corresponding to a portion of Fig. 2 and showing a third modification of the LED lighting unit mounting plate used in the heat radiation apparatus for LED lighting of Figs. 1 and 2; and
Fig. 12 is an exploded view corresponding to a portion of Fig. 2 and showing a fourth modification of the LED lighting unit mounting plate used in the heat radiation apparatus for LED lighting of Figs. 1 and 2.

### DESCRIPTION OF THE PREFERRED EMBODIMENT

An embodiment of the present invention will next be described with reference to the drawings.

The term "aluminum" as used in the following description encompasses aluminum alloys in addition to pure aluminum.

In the following description, the left-hand and righthand sides of Fig. 2 will be referred to as "left" and "right," respectively, and the longitudinal direction of heat radiation fins (a direction (front-back direction) orthogonal to the sheet of Fig. 2) will be referred to the "front-rear direction."

Notably, the same reference numerals are used throughout the drawings to refer to the same portions and members.

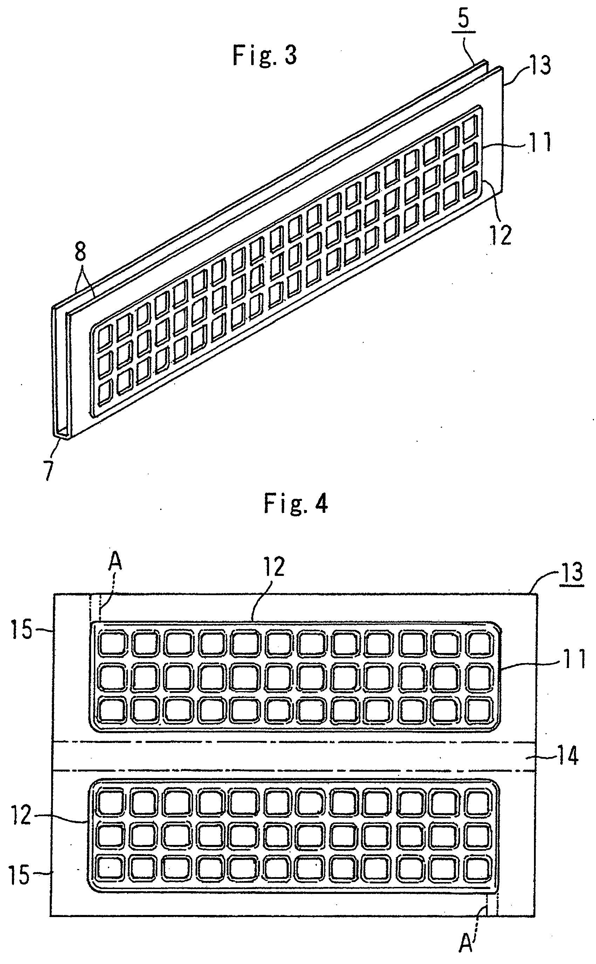

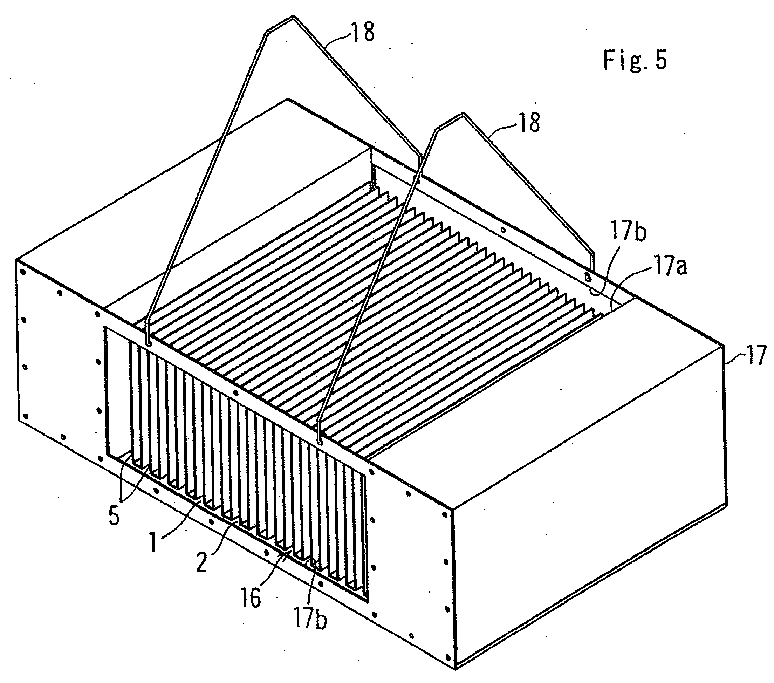

Fig. 1 shows the overall structure of a heat radiation apparatus for LED lighting of the present invention, and Figs. 2 and 3 show the structure of a main portion of the heat radiation apparatus. Fig. 4 shows a metal substrate used for manufacturing a heat radiation fin used in the heat radiation apparatus for LED lighting of Figs. 1 and 2. Fig. 5 shows the manner of use of a lighting apparatus which includes the heat radiation apparatus for LED lighting of the present invention.

As shown in Figs. 1 and 2, a heat radiation apparatus for LED lighting 1 includes an LED lighting unit mounting plate 2, and a plurality of heat radiation fins 5. The LED lighting unit mounting plate 2 is formed of a thermally conductive material such as aluminum, copper (the term "copper" encompasses copper alloys; this applies to the following description), or the like. One surface (lower surface in the present embodiment) of the LED lighting unit mounting plate 2 serves as a lighting unit mounting surface 3 onto which an LED lighting unit is mounted, and the other surface (upper surface in the present embodiment) of the LED lighting unit mounting plate 2 is a flat heat transfer surface 4. The heat radiation fins 5 are formed of a thermally conductive material such as aluminum, copper (the term "copper" encompasses copper alloys), or the like, and are disposed on the heat transfer surface 4 of the LED lighting unit mounting plate 2.

The LED lighting unit mounting plate 2 has a rectangular shape elongated in the left-right direction, and an LED lighting unit 6 is mounted on the lighting unit mounting surface 3 of the LED lighting unit mounting plate 2. The LED lighting unit 6 includes, for example, a circuit board 6a, a plurality of blue LED packages 6b disposed on the circuit board 6a and each including a blue LED, a plurality of red LED packages 6c disposed on the circuit board 6a and each including a red LED, and two switching power supplies (not shown) for the LED packages 6b and 6c. The heat radiation apparatus for LED lighting 1 and the LED lighting unit 6 constitute a lighting apparatus 16 which is used as a lighting apparatus for raising plants in a plant cultivation factory.

As shown in Figs. 2 and 3, each heat radiation fin 5 has a base portion 7 which has the shape of a rectangular horizontal flat plate elongated in the front-rear direction, and heat radiation portions 8 each of which has the shape of a rectangular vertical flat plate elongated in the front-rear direction. The base portion 7 is fixed to the heat transfer surface 4 of the LED lighting unit mounting plate 2 such that the base portion 7 is in surface contract with the heat transfer surface 4 and receives the heat transferred from the heat transfer surface 4. The heat radiation portions 8 are integrally provided at left and right side edges (two long sides) of the base portion 7 such that the heat radiation portions 8 project upward. The heat radiation portions 8 radiate the heat transferred from the LED lighting unit mounting plate 2. The heat radiation portions 8 are provided over the entire length of the base portion 7, and each heat radiation fin 5 has a U-shaped transverse cross section as a whole. The plurality of heat radiation fins 5 are disposed such that the heat radiation portions 8 are spaced from one another in the left-right direction. In this state, the heat radiation fins 5 are fixed to the LED lighting unit mounting plate 2 by making use of fixtures 9 such as screws or rivets which penetrate the base portions 7.

Each heat radiation portion 8 of each heat radiation fin 5 has a heat pipe portion 11 extending over the entire length of the heat radiation portion 8. The heat pipe portion 11 of each heat radiation portion 8 is formed by charging an operation fluid into a single operation fluid storing circuit 12 which bulges from the opposite sides of the heat radiation portion 8 and which is hollow and is endless. The operation fluid storing circuit 12 has the shape of a rectangular lattice which is elongated in the front-rear direction and is formed over almost the entirety of the heat radiation portion 8. Notably, in Fig. 1, the heat pipe portion 11 and the operation fluid storing circuit 12 are not shown. Each heat radiation fin 5 is manufactured by bending, into the shape of letter U, a substrate 13 which is manufactured by laminating and joining two metal plates formed of aluminum, copper, or the like. The operation fluid storing circuit 12 of the heat pipe portion 11 is provided by bulging outward at least one of the two metal plates which form the substrate 13 (both the metal plates in the present embodiment).

Preferably, the length L1 of the LED lighting unit mounting plate 2 in the left-right direction (the direction orthogonal to the longitudinal direction of the base portion 7 of each heat radiation fin 5) is 200 mm or greater, the length L2 of the long sides of the base portion 7 and heat radiation portions 8 of each heat radiation fin 5 in the front-rear direction is 200 mm or greater, the straight distance L3 from the base portion 7 to the distal end of each heat radiation portion 8 is 50 mm or greater, and the spacing S between the two heat radiation portions 8 of each heat radiation fin 5 is 7 mm or greater. Notably, the upper limit of the spacing S between the two heat radiation portions 8 of each heat radiation fin 5 is about 20 mm. Also, preferably, the spacing between the heat radiation portions 8 of adjacent heat radiation fins 5, which portions are located close to each other, is equal to or greater than the above-mentioned spacing S.

As shown in Fig. 4, the substrate 13 before being bent into the shape of letter U is composed of a rectangular first portion 14 which forms the base portion 7, and two rectangular second portions 15 which are integrally provided at opposite long sides of the first portion 14 and which form the heat radiation portions 8. The two second portions 15 have the heat pipe portions 11 which are provided independently of each other. The heat pipe portion 11 of each second portion 15 is formed by charging an operation fluid into the single operation fluid storing circuit 12 which is formed by bulging outward at least one of the two metal plates which form the substrate 13 (both the metal plates in the present embodiment). The two second portions 15 of the substrate 13 are bent in relation to the first portion 14, whereby the heat radiation fin 5 is formed.

The substrate 13 before being bent into the shape of letter U is manufactured by a so-called roll bond method. Specifically, a bonding prevention agent is printed in a predetermined pattern on at least one of mating surfaces of two aluminum plates, which are then bonded together under pressure so as to form a laminated plate. A fluid pressure is introduced into an unbonded portion of the laminated plate, to thereby form two operation fluid storing circuits 12 which bulge from the opposite sides of the laminated plate. Subsequently, an operation fluid is charged into the operation fluid storing circuits 12, whereby the substrate 13 before being bent is completed. The unbonded portion of the laminated plate is composed of two unbonded portions for operation fluid storing circuit which correspond to the two operation fluid storing circuits 12, and two unbonded portions for fluid pressure introduction which extend from the two unbonded portions for operation fluid storing circuit to the peripheral edge of the laminated plate. When a fluid pressure is introduced from the unbonded portions for fluid pressure introduction, the unbonded portions for operation fluid storing circuit become the operation fluid storing circuits 12 which bulge from the opposite sides of the laminated plate, and the unbonded portions for fluid pressure introduction become operation fluid charging portions which bulge from the opposite sides of the laminated plate. One end of each operation fluid charging portion communicates with the operation fluid storing circuits 12, and the other end of the operation fluid charging portion is open to the peripheral edge of the laminated plate. After the operation fluid is charged into the operation fluid storing circuits 12 through the operation fluid charging portions, the operation fluid charging portions are sealed, whereby the substrate 13 is completed. The sealed operation fluid charging portions are indicated by chain lines A in Fig. 4.

Notably, the substrate 13 may be manufactured by, for example, brazing two aluminum plates which have outwardly bulging portions for forming the operation fluid storing circuits 12 and the operation fluid charging portions.

As shown in Fig. 5, a cover 17 which covers the entirety of the lighting apparatus 16 is attached to the lighting apparatus 16. In use, by using a hanging member 18 provided on the cover 17, the lighting apparatus 16 is hung from a mounting beam provided, for example, above a cultivation shelf in a plant cultivation factory. A radiation opening (not shown) is formed in the lower wall of the cover 17 so as to radiate downward the light emitted from the LED packages 6b and 6c of the LED lighting unit 6, and an opening 17a is formed in the upper wall of the cover 17 so as to expose all the heat radiation fins 5 to the outside. Of all the side walls of the cover 16, the side walls located on the opposite sides with respect to the longitudinal direction of the heat radiation fins 5 have vent openings 17b. Air having flowed into the cover 17 through one vent opening 17b flows through the space between the two heat radiation portions 8 of each heat radiation fin 5 and through the space between the radiation portions 8 of adjacent heat radiation fins 5 which are located close to each other, passes through the other vent opening 17b, and flows to the outside of the cover 17.

Notably, a current of 0 to 700 mA is supplied to each of the LED packages 6b, 6c disposed on the board 6a of the LED lighting unit 6 attached to the lighting unit mounting surface 3 of the heat radiation apparatus for LED illumination 1 of the lighting apparatus 16. For example, in the case where a current of 500 mA is supplied to each LED package, the electric power supplied to LEDs per unit area of the board 6a is about 6000 W/m².

In the above-described heat radiation apparatus for LED lighting 1, the heat generated from the LED lighting unit 6 of the lighting apparatus 16 flows to the lighting unit mounting surface 3 of the LED lighting unit mounting plate 2, and then flows to the base portion 7 of each heat radiation fin 5 through the heat transfer surface 4. The heat transferred to the base portion 7 of each heat radiation fin 5 flows to the operation fluid in a lower region within the operation fluid storing circuit 12 of the heat pipe portion 11 of each heat radiation portion 8, whereby the operation fluid evaporates and becomes gas (gaseous phase). As a result, the pressure in the lower region within the operation fluid storing circuit 12 increases, and the gaseous-phase operation fluid spreads over the entire operation fluid storing circuit 12. During a period during which the gaseous-phase operation fluid spreads over the entire operation fluid storing circuit 12, the heat carried by the gaseous-phase operation fluid flows to the heat radiation portion 8 and is radiated from the heat radiation portion 8 to the air flowing inside the cover 17. The gaseous-phase operation fluid from which heat has been removed condenses. As a result, the entirety of each heat radiation portion 8 of each heat radiation fin 5 has a uniform temperature, and heat is uniformly radiated from the entirety of each heat radiation portion 8.

Meanwhile, since the liquid-phase operation fluid produced as a result of condensation flows downward due to the gravity, a flow of the gaseous-phase operation fluid and a flow of the liquid-phase operation fluid are produced in each heat pipe portion 11, whereby circulation of the operation fluid occurs. Therefore, the heat transferred from the entire LED lighting unit mounting plate 2 is radiated uniformly, whereby the entire LED lighting unit 6 disposed on the lighting unit mounting surface 4 of the LED lighting unit mounting plate 2 is cooled efficiently.

In the above-described heat radiation apparatus for LED lighting 1, the operation fluid storing circuit 12 of the heat pipe portion 11 provided at each heat radiation portion 8 of each heat radiation fin 5 shown in Figs. 2 and 3 is formed by bulging outward both the two metal plates of the substrate 13. However, alternatively, the operation fluid storing circuit 12 may be formed by bulging outward only one of the two metal plates which constitute the substrate 13.

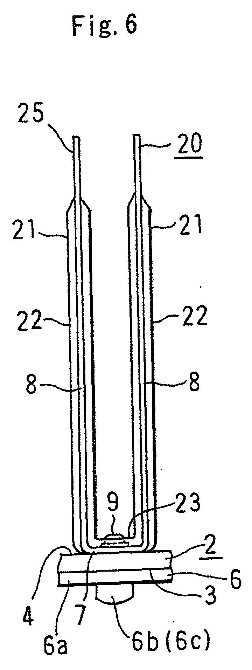

Figs. 6 to 8 show a modification of the heat radiation fin used in the heat radiation apparatus for LED lighting.

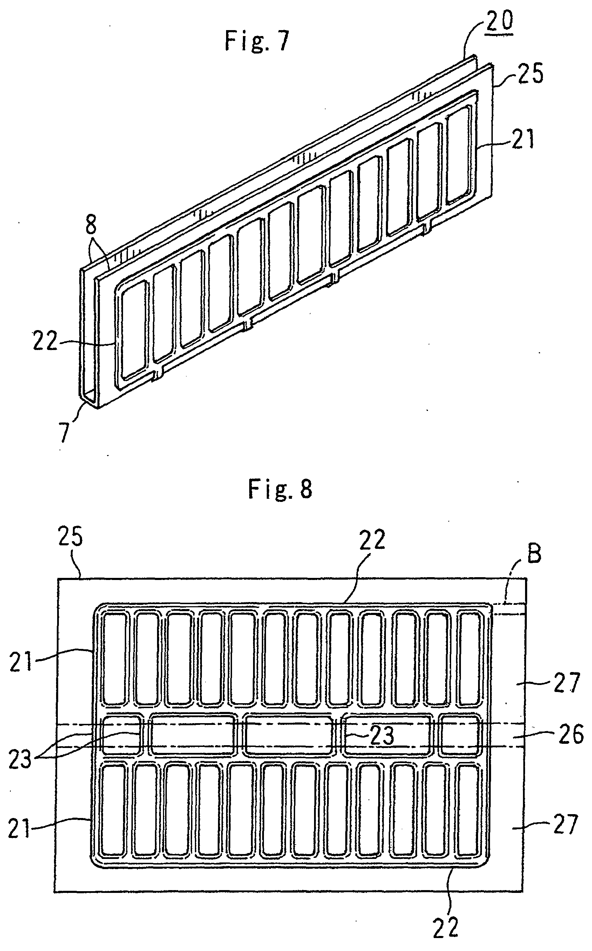

In Figs. 6 and 7, a heat pipe portion 21 which is provided at each heat radiation portion 8 of a heat radiation fin 20 and which extends over almost the entire length of the heat radiation portion 8 is formed by charging an operation fluid into a single operation fluid storing circuit 22 which bulges from the opposite sides of the heat radiation portion 8 and which is hollow and is endless. The operation fluid storing circuit 22 has the shape of a rectangular lattice which is elongated in the front-rear direction and is formed over almost the entirety of the heat radiation portion 8. The interiors of the operation fluid storing circuits 22 of the heat pipe portions 21 provided at the two heat radiation portions 8 communicate with each other through hollow communication portions 23 which are provided at the base portion 7 and which bulges from only the upper surface of the base portion 7. The lower surface of the base portion 7 is flat. Each heat radiation fin 20 is formed by bending, into the shape of letter U, a substrate 25 which is manufactured by laminating and joining two metal plates formed of aluminum, copper, or the like. The operation fluid storing circuit 22 of the heat pipe portion 21 is provided by bulging outward at least one of the two metal plates which form the substrate 25 (both the metal plates in the present embodiment). The hollow communication portions 23 are provided by bulging upward only one (upper one) of the two metal plates which form the substrate 25. The heat radiation fin 20 is fixed to the LED lighting unit mounting plate 2 by using fixtures 9 which penetrate portions of the base portion 7 where the hollow communication portions 23 are not provided.

As shown in Fig. 8, the substrate 25 before being bent into the shape of letter U is composed of a rectangular first portion 26 which forms the base portion 7, and two rectangular second portions 27 which are integrally provided at opposite long sides of the first portion 26 and which form the heat radiation portions 8. The two second portions 27 have the heat pipe portions 21, and the first portion 26 has the hollow communication portions 23. The heat pipe portion 21 of each second portion 27 is formed by charging an operation fluid into the single operation fluid storing circuit 22 which is hollow and endless. The operation fluid storing circuit 22 is formed by bulging outward at least one of the two metal plates which form the substrate 25 (both the metal plates in the present embodiment). The hollow communication portions 23 of the first portion 26 are formed by bulging outward the two metal plates which form the substrate 25 and crushing one of the metal plates into a flat shape. The operation fluid storing circuit 22 of each second portion 27 has the shape of a rectangular lattice elongated in the longitudinal direction of the second portion 27, and is formed over almost the entirety of the second portion 27. The plurality of hollow communication portions 23 of the first portion 26 are formed at predetermined intervals in the longitudinal direction of the first portion 26. The two second portions 27 of the substrate 25 are bent in relation to the first portion 26, whereby the heat radiation fin 20 is formed.

The substrate 25 before being bent into the shape of letter U is manufactured by a so-called roll bond method. Specifically, a bonding prevention agent is printed in a predetermined pattern on at least one of mating surfaces of two aluminum plates, which are then bonded together under pressure so as to form a laminated plate. A fluid pressure is introduced into an unbonded portion of the laminated plate, to thereby form two operation fluid storing circuits 22 which bulge from the opposite sides of the laminated plate and the hollow communication portions 23 which bulge from the opposite sides of the laminated plate. Subsequently, an operation fluid is charged into the operation fluid storing circuits 22, and portions of one metal plate which correspond to the hollow communication portions 23 are crushed such that the one metal plate becomes flat, whereby the substrate 25 before being bent is completed. The unbonded portion of the laminated plate is composed of two unbonded portions for operation fluid storing circuit which correspond to the two operation fluid storing circuits 22, a plurality of unbonded portions for communication portion formation which connect the two unbonded portions for operation fluid storing circuit, and a single unbonded portion for fluid pressure introduction which extends from one unbonded portion for operation fluid storing circuit to the peripheral edge of the laminated plate. When a fluid pressure is introduced from the unbonded portion for fluid pressure introduction, the unbonded portions for operation fluid storing circuit become the operation fluid storing circuits 22 which bulge from the opposite sides of the laminated plate, the unbonded portions for communication portion formation become the hollow communication portions 23 which bulge from the opposite sides of the laminated plate, and the unbonded portion for fluid pressure introduction becomes an operation fluid charging portion which bulge from the opposite sides of the laminated plate. The one end of the operation fluid charging portion communicates with one of the operation fluid storing circuits 22, and the other end of the operation fluid charging portion is open to the peripheral edge of the laminated plate. After the operation fluid is charged into the operation fluid storing circuits 22 through the operation fluid charging portion, the operation fluid charging portion is sealed, and one metal plate of the laminated plate is crushed to become flat, whereby the hollow communication portions 23 are formed such that the hollow communication portions 23 bulge from only one side of the laminated plate. Thus, the substrate 25 is completed. The sealed operation fluid charging portion is indicated by a chain line B in Fig. 8.

Notably, the substrate 25 may be formed by, for example, brazing together one aluminum plate which has outwardly bulging portions for forming the operation fluid storing circuits 22, the hollow communication portions 23, and the operation fluid charging portion, and another aluminum plate which has outwardly bulging portions for forming the operation fluid storing circuits 22 and the operation fluid charging portion.

The heat radiation fin 20 shown in Figs. 6 through 8 may be formed such that the operation fluid storing circuits 22 of the heat pipe portions 21 of the two heat radiation portions 8 bulge from only the side surfaces of the heat radiation portions 8 which face each other and the hollow communication portion 23 bulges from only the upper surface of the base portion 7. In this case, the laminated plate may be formed by the above-mentioned roll bond method such that only one metal plate bulges outward.

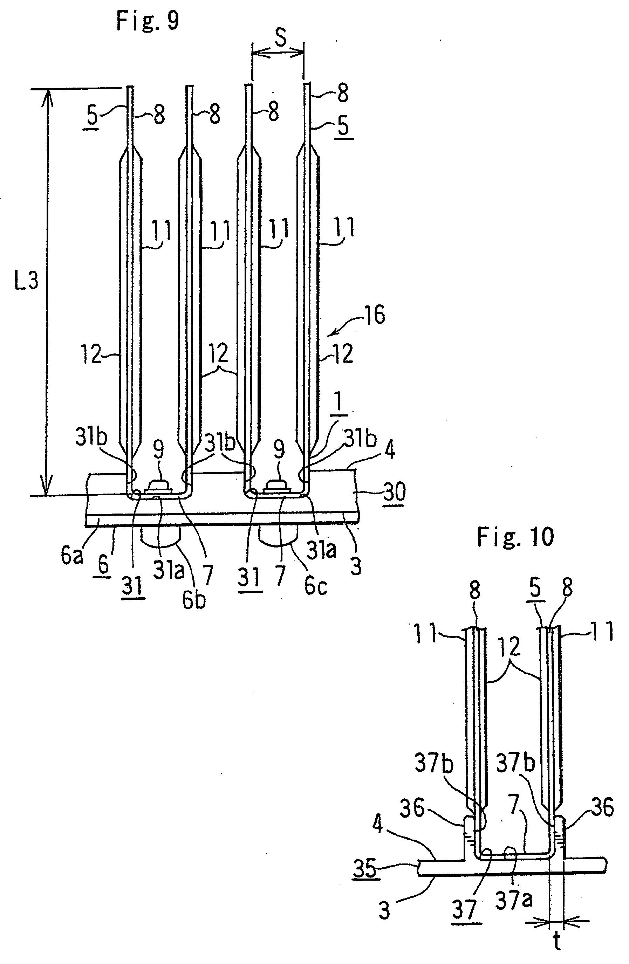

Figs. 9 through 12 show modifications of the LED lighting unit mounting plate used in the heat radiation apparatus for LED lighting.

In the case of an LED lighting unit mounting plate 30 shown in Fig. 9, a plurality of fin mounting grooves 31 extending in the front-rear direction are formed on the heat transfer surface 4 at predetermined intervals in the left-right direction. The fin mounting grooves 31 are concave grooves formed by depressing the heat transfer surface 4 of the LED lighting unit mounting plate 30, and their front and rear ends are open to the front and rear side surfaces, respectively, of the LED lighting unit mounting plate 30. For example, in the case where the LED lighting unit mounting plate 30 is formed of aluminum, the entirety of the LED lighting unit mounting plate 30, including the fin mounting grooves 31, is formed by extrusion molding.

Each heat radiation fin 5 is fixed to the LED lighting unit mounting plate 30, by making use of fixtures 9 such as screws or rivets which penetrate the base portion 7 of the heat radiation fin 5, in a state in which the heat pipe portions 11 are located outside the corresponding fin mounting groove 31, and the base portion 7 and parts of the two heat radiation portions 8 located near the base portion 7 are fitted into the fin mounting groove 31. Accordingly, all the heat radiation fins 5 are disposed on the LED lighting unit mounting plate 30 such that the heat radiation portions 8 are spaced from one another in the left-right direction. The base portion 7 of each heat radiation fin 5 is in contact with the bottom surface 31a of the corresponding fin mounting groove 31, and the parts of the heat radiation portions 8 fitted into the fin mounting groove 31 are in contact with the opposite side surfaces 31b of the fin mounting groove 31. Notably, it is preferred that the base portion 7 of each heat radiation fin 5 and parts of the two heat radiation portions 8 thereof located near the base portion 7 be press-fitted into one fin mounting groove 31.

An LED lighting unit mounting plate 35 shown in Fig. 10 has a plurality of ride pairs each composed of two ridges 36 which are integrally formed on the heat transfer surface 4 such that they project upward from the LED lighting unit mounting plate 35. The plurality of ridge pairs are spaced from one another such that all the ridges 36 become parallel to one another. The two ridges 36 of each ridge pair and a portion of the LED lighting unit mounting plate 35 located between the two ridges 36 of that ridge pair form a fin mounting groove 37. A portion of the heat transfer surface 4 of the LED lighting unit mounting plate 35 located between the two ridges 36 of each ridge pair serves as the bottom surface 37a of the corresponding fin mounting groove 37, and the surfaces of the two ridges 36 of that ridge pair which face each other serves as the side surfaces 37b of the fin mounting groove 37.

The base portion 7 of each heat radiation fin 5 and parts of the two heat radiation portions 8 thereof located near the base portion 7 are fitted into one fin mounting groove 37 such that the heat pipe portions 11 of the heat radiation fin 5 are located outside the fin mounting groove 37. The base portion 7 of each heat radiation fin 5 is in contact with the bottom surface 37a of the corresponding fin mounting groove 37, and the parts of the heat radiation portions 8 fitted into the fin mounting groove 37 are in contact'with the opposite side surfaces 37b of the fin mounting groove 37.

It is preferred that the total thickness t of a part of each heat radiation portion 8 of each heat radiation fin 5 fitted into the fin mounting groove 37 and the corresponding ridge 36 of the fin mounting groove 37 be 1.5 mm or greater. This was obtained from the results of calculation for computer simulation.

Namely, computer simulation was performed for a heat radiation apparatus for LED lighting in which the total thickness t of the part of each heat radiation portion 8 of each heat radiation fin 5 fitted into the fin mounting groove 37 and the corresponding ridge 36 of the fin mounting groove 37 was set to 1.5 mm, a heat radiation apparatus for LED lighting in which the total thickness t was set to 5 mm, and a heat radiation apparatus for LED lighting in which no fin mounting groove was formed, and the base portion 7 of each heat radiation fin 5 was fixed to the heat transfer surface of an LED lighting unit mounting plate having the shape of a flat plate. The calculation for computer simulation was performed under the assumption that a heat generation source was disposed on the lighting unit mounting surface 3 of the LED lighting unit mounting plate 35 at a position right under the base portion 7 of the heat radiation fin 5, and the amount of input heat was 50 W. There was obtained the temperature of the heat generation source at the time when the temperature of the heat generation source became constant as a result of heat input for a predetermined time. The ambient temperature was set to 25°C. Table 1 shows the results of the computer simulation.

**Table 1**

| | Temperature of heat generation source | Amount of input heat | Ambient temperature |
|---|---|---|---|
| No fin mounting qroove | 82.5°C | 50 W | 25°C |
| Thickness t = 1.5 mm | 80.2°C | 50 W | 25°C |
| Thickness t = 5 mm | 79.7°C | 50 W | 25°C |

Table 1 clearly shows that the heat generation source attached to the lighting unit mounting surface 3 is efficiently cooled in the case where the fin mounting grooves 37 are formed on the LED lighting unit mounting plate 35, and the above-mentioned thickness is 1.5 mm or greater.

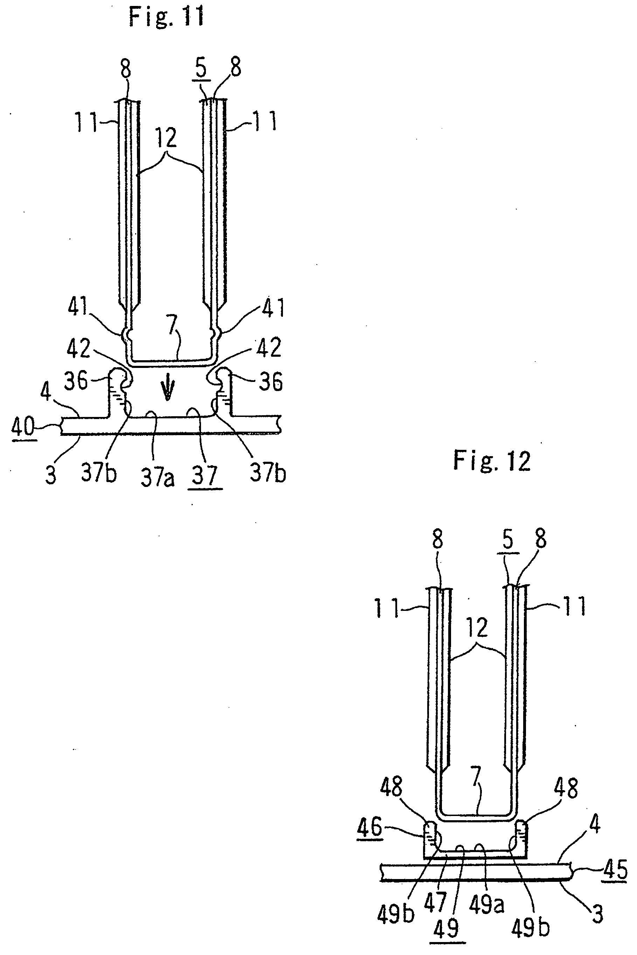

In the case of an LED lighting unit mounting plate 40 shown in Fig. 11, convex portions 41 extending in the front-rear direction are integrally provided on the surfaces of the two ridges 36 of each ridge pair which forms a fin mounting groove 37, the surfaces facing toward the inside of the fin mounting groove 37, or the surfaces of parts of the two heat radiation portions 8 of each heat radiation fin 5 which are fitted into the fin mounting groove 37, the surfaces facing toward the outside of the fin mounting groove 37. Also, concave portions 42 which extend in the front-rear direction and into which the convex portions 41 fit are formed on the surfaces of the ridges 36 or the surfaces of the parts of the two heat radiation portions 8 on which the convex portions 41 are not formed. In the present embodiment, the convex portions 41 are formed on the two heat radiation portions 8 of each heat radiation fin 5, and the concave portions 42 are formed on the two ridges 36 of each ridge pair. Since the convex portions 41 and the concave portions 42 are utilized for fixing each heat radiation fin 5 to the LED lighting unit mounting plate 40, the number of fixtures (screws, rivets, or the like) used to fix each heat radiation fin 5 to the LED lighting unit mounting plate 40 can be decreased, and work of fixing the heat radiation fins becomes easier.

The structure of the remaining portion is identical to that shown in Fig. 10, and it is preferred that the total thickness t of a part of each heat radiation portion 8 of each heat radiation fin 5 fitted into the fin mounting groove 37 and the corresponding ridge 36 of the fin mounting groove 37 be 1.5 mm or greater.

Although not illustrated in Figs. 10 and 11, the heat radiation fins 5 are fixed to the LED lighting unit mounting plate 35, 40 by making use of fixtures 9 such as screws or rivets which penetrate the base portions 7.

In the case of an LED lighting unit mounting plate 45 shown in Fig. 12, a groove forming member 46 having a U-shaped transverse cross section is fixed to the heat transfer surface 4 of the LED lighting unit mounting plate 45. The groove forming member 46 is formed separately from the LED lighting unit mounting plate 45 by using a thermally conductive material such as aluminum or copper. The groove forming member 46 is composed of a flat plate 47 and a pair of parallel ridges 48 which are integrally provided at opposite side edges of the flat plate 47 such that the ridges 48 extend upward from the flat plate 47. The flat plate 47 and the two ridges 48 of the groove forming member 46 form a fin mounting groove 49.

A portion of the upper surface of the flat plate 47 of the groove forming member 46 located between the two ridge portion 48 serves the bottom surface 49a of the fin mounting groove 49, and the inner surfaces of the two ridges 48 which face each other serve as the side surfaces 49b of the fin mounting groove 49. The heat pipe portions 11 of each heat radiation fin 5 are located outside the corresponding fin mounting groove 49, and the base portion 7 and parts of the two heat radiation portions 8 located near the base portion 7 are fitted into the fin mounting groove 49. The base portion 7 of each heat radiation fin 5 is in contact with the bottom surface 49a of the fin mounting groove 49, and the parts of the heat radiation portions 8 fitted into the fin mounting groove 49 are in contact with the opposite side surfaces 49b of the fin mounting groove 49.

Although not illustrated, the groove forming member 46 and the heat radiation fin 5 are fixed to the LED lighting unit mounting plate 45 by making use of fixtures such as screws or rivets which penetrate the flat plate 47 and the base portion 7.

It is preferred that the total thickness t of a part of each heat radiation portion 8 of the heat radiation fin 5 fitted into the fin mounting groove 49 and the corresponding ridge 48 of the groove forming member 46 be 1.5 mm or greater.

Notably, a lighting apparatus which is used as a searchlight for construction sites may be constituted by an LED lighting unit and the heat radiation apparatus for LED lighting 1 according to the present invention. In this case, white light or light of incandescent color is radiated from the LED lighting unit.

All of the above-mentioned features as well as all features of all embodiments and all features of all claims can be combined with each other as long as they do not contradict each other.

## Claims

1. A heat radiation apparatus (1) for LED lighting, comprising:
an LED lighting unit mounting plate (2;30;35;40;45) which is formed of a thermally conductive material and which has a lighting unit mounting surface (3) to which an LED lighting unit (6) is mounted and a flat heat transfer surface (4); and
a plurality of heat radiation fins (5;20) disposed on the heat transfer surface (4) of the LED lighting unit mounting plate (2;30;35;40;45), wherein
each of the heat radiation fins (5;20) has a base portion (7) and a heat radiation portion (8) integrally provided on the base portion (7) such that the heat radiation portion (8) extends upward from the base portion (7);
the plurality of heat radiation fins (5;20) are fixed to the LED lighting unit mounting plate (2;30;35;40;45) such that the heat radiation portions (8) are spaced from one another; and
a hollow operation fluid storing circuit (12;22) is formed in the heat radiation portion (8) of each heat radiation fin (5;20), and an operation fluid is charged into the operation fluid storing circuit (12;22), whereby a heat pipe portion (11;21) is provided at the heat radiation portion (8).

2. A heat radiation apparatus for LED lighting according to claim 1, wherein the base portion of each heat radiation fin has a rectangular shape and a flat surface facing toward the LED lighting unit mounting plate, the heat radiation portion is provided at at least one of two long sides of the base portion, and each heat radiation fin is fixed to the LED lighting unit mounting plate by a fixture which penetrates the base portion of the heat radiation fin.

3. A heat radiation apparatus for LED lighting according to claim 2, wherein the heat radiation portion of each heat radiation fin is provided at each of the two long sides of the base portion, and the heat radiation fin has a U-like shape as a whole.

4. A heat radiation apparatus for LED lighting according to claim 3, wherein the two heat radiation portions of each heat radiation fin have heat pipe portions, and the operation fluid storing circuits of the heat pipe portions of the two heat radiation portions communicate with each other through a hollow communication portion provided at the base portion.

5. A heat radiation apparatus for LED lighting according to claim 4, wherein each heat radiation fin is formed by bending, into a U-like shape, a substrate manufactured by laminating and joining two metal plates, the operation fluid storing circuit of the heat pipe portion of each heat radiation portion is provided by bulging outward at least one of the two metal plates which form the substrate, and the hollow communication portion of the base portion is provided by bulging only one of the metal plates which form the substrate in a direction opposite the LED lighting unit mounting plate.

6. A heat radiation apparatus for LED lighting according to claim 1, wherein a plurality of fin mounting grooves are provided on the heat transfer surface of the LED lighting unit mounting plate such that the mounting grooves are spaced from one another, each heat radiation fin is fixed to the LED lighting unit mounting plate in a state in which the heat pipe portion is located outside the corresponding fin mounting groove, and the base portion and a part of the heat radiation portion near the base portion are fitted into the fin mounting groove.

7. A heat radiation apparatus for LED lighting according to claim 6, wherein the base portion of each heat radiation fin is in contact with a bottom surface of the corresponding fin mounting groove, and a part of the heat radiation portion of the heat radiation fin fitted into the fin mounting groove is in contact with a side surface of the fin mounting groove.

8. A heat radiation apparatus for LED lighting according to claim 6, wherein the plurality of concave grooves are formed by depressing the heat transfer surface of the LED lighting unit mounting plate such that the concave grooves become parallel to one another, and each concave grove serves as a fin mounting groove.

9. A heat radiation apparatus for LED lighting according to claim 6, wherein a plurality of ridge pairs each composed of two upward projecting ridges are provided at predetermined intervals on the heat transfer surface of the LED lighting unit mounting plate such that all the ridges become parallel to one another, and the two ridges of each ridge pair and a portion of the LED lighting unit mounting plate located between the two ridges of that ridge pair form a fin mounting groove.

10. A heat radiation apparatus for LED lighting according to claim 6, wherein a plurality of groove forming members each of which has a U-shaped transverse cross section, which are formed separately from the LED lighting unit mounting plate by using a thermally conductive material, and which is composed of a flat plate and a pair of parallel ridges integrally provided at opposite side edges of the plate are fixed to the heat transfer surface of the LED lighting unit mounting plate at predetermined intervals such that all the ridges become parallel to one another, and the two ridges and flat plate of each groove forming member form a fin mounting groove.

11. A heat radiation apparatus for LED lighting according to claim 6, wherein the base portion of each heat radiation fin has a rectangular shape, the heat radiation portion is provided at each of two long sides of the base portion, whereby the heat radiation fin has a U-like shape as a whole, and parts of the two heat radiation portions near the base portion are fitted into the fin mounting groove.

12. A heat radiation apparatus for LED lighting according to claim 11, wherein convex portions extending in the front-rear direction are integrally provided on the two side surfaces of each fin mounting groove of the LED lighting unit mounting plate or surfaces of the parts of the two heat radiation portions of each heat radiation fin fitted into the fin mounting groove, the surfaces facing toward the outside of the fin mounting groove, and concave portions which extend in the front-rear direction and into which the convex portions are fitted are provided on the two side surfaces of the fin mounting groove or the surfaces of the parts of the two heat radiation portions on which the convex portions are not provided.

13. A heat radiation apparatus for LED lighting according to claim 3 or 11, wherein the two heat radiation portions of each heat radiation fin have heat pipe portions which are independent of each other.

14. A heat radiation apparatus for LED lighting according to claim 4 or 13, wherein each heat radiation fin is formed by bending, into a U-like shape, a substrate manufactured by laminating and joining two metal plates, and the operation fluid storing circuit of the heat pipe portion of each heat radiation portion is provided by bulging outward at least one of the two metal plates which form the substrate.

15. A lighting apparatus comprising a heat radiation apparatus for LED lighting according to any one of claims 1 to 14, and a plurality of LEDs which are mounted on the lighting unit mounting surface of the LED lighting unit mounting plate of the heat radiation apparatus for LED lighting and which serve as a light source.

16. A lighting apparatus according to claim 15, wherein the LED lighting unit includes a circuit board, a plurality of blue LED packages disposed on the circuit board and each including a blue LED, a plurality of red LED packages disposed on the circuit board and each including a red LED, and a switching power supply for the LED packages, and the LED lighting unit is mounted to the lighting unit mounting surface of the LED lighting unit mounting plate such that each LED package is located right under the base portion of the corresponding heat radiation fin.

## Patentansprüche

1. Wärmestrahlungsvorrichtung (1) für LED-Beleuchtung, umfassend:
eine Montageplatte (2; 30; 35; 40; 45) für eine LED-Beleuchtungseinheit, die aus einem thermisch leitfähigen Material ausgebildet ist und die eine Montageoberfläche (3) für eine Beleuchtungseinheit, an welcher eine LED-Beleuchtungseinheit (6) montiert ist, und eine flache Wärmetransferoberfläche (4) aufweist; und
mehrere Wärmestrahlungslamellen (5; 20), die an der Wärmetransferoberfläche (4) der Montageplatte (2; 30; 35; 40; 45) für eine LED-Beleuchtungseinheit angeordnet sind, wobei
jede der Wärmeleitungslamellen (5; 20) einen Basisabschnitt (7) und einen Wärmestrahlungsabschnitt (8) aufweist, der integral an dem Basisabschnitt (7) bereitgestellt ist, sodass der Wärmestrahlungsabschnitt (8) sich von dem Basisabschnitt (7) nach oben erstreckt;
die mehreren Wärmestrahlungslamellen (5; 20) an der Montageplatte (2; 30; 35; 40; 45) für eine LED-Beleuchtungseinheit fixiert sind, sodass die Wärmestrahlungsabschnitte (8) voneinander beabstandet sind; und
ein hohler Speicherkreislauf (12; 22) für ein Betriebsfluid in dem Wärmestrahlungsabschnitt (8) von jeder Wärmestrahlungslamelle (5; 20) ausgebildet ist und ein Betriebsfluid in den Speicherkreislauf für ein Betriebsfluid geladen ist, wodurch ein Wärmerohrabschnitt (11; 21) an dem Wärmestrahlungsabschnitt (8) bereitgestellt ist.

2. Wärmestrahlungsvorrichtung für LED-Beleuchtung nach Anspruch 1, wobei der Basisabschnitt von jeder Wärmestrahlungslamelle eine rechteckige Form und eine flache Oberfläche aufweist, die der Montageplatte für eine LED-Beleuchtungseinheit zugewandt ist, der Wärmestrahlungsabschnitt an mindestens einer von zwei langen Seiten des Basisabschnitts bereitgestellt ist und jede Wärmestrahlungslamelle an der Montageplatte für eine LED-Beleuchtungseinheit durch eine Fixierung fixiert ist, welche den Basisabschnitt der Wärmestrahlungslamelle penetriert.

3. Wärmestrahlungsvorrichtung für LED-Beleuchtung nach Anspruch 2, wobei der Wärmestrahlungsabschnitt von jeder Wärmestrahlungslamelle an jeder der zwei langen Seiten des Basisabschnitts bereitgestellt ist und die Wärmestrahlungslamelle eine U-ähnliche Form als ein Ganzes aufweist.

4. Wärmestrahlungsvorrichtung für LED-Beleuchtung nach Anspruch 3, wobei die zwei Wärmestrahlungsabschnitte von jeder Wärmestrahlungslamelle Wärmerohrabschnitte aufweisen und die Speicherkreisläufe der Betriebsflüssigkeit der Wärmerohrabschnitte der zwei Wärmestrahlungsabschnitte miteinander durch einen hohlen Verbindungsabschnitt verbunden sind, der an dem Basisabschnitts bereitgestellt ist.

5. Wärmestrahlungsvorrichtung für LED-Beleuchtung nach Anspruch 4 wobei jede Wärmestrahlungslamelle durch Biegen in eine U-ähnliche Form ausgebildet ist, ein Substrat durch Laminieren und Verbinden zweier Metallplatten hergestellt ist, der Speicherkreislauf für ein Betriebsfluid des Wärmerohrabschnitts von jedem Wärmestrahlungsabschnitt durch nach außen Ausbeulen von mindestens einer der zwei Metallplatten bereitgestellt ist, welche das Substrat ausbilden, und der hohle Verbindungsabschnitt des Basisabschnitt durch ausbeulen von nur einer der Metallplatten bereitgestellt ist, welche das Substrat in einer Richtung gegenüber der Montageplatte für eine LED-Beleuchtungseinheit ausbilden.

6. Wärmestrahlungsvorrichtung für LED-Beleuchtung nach Anspruch 1, wobei mehrere Lamellenmontagenuten an der Wärmetransferoberfläche der Montageplatte für eine LED Beleuchtungseinheit bereitgestellt sind, sodass die Montagenuten voneinander beabstandet sind, jede Wärmestrahlungslamelle an der Montageplatte für eine LED Beleuchtungseinheit in einem Zustand fixiert ist, in welchem der Wärmerohrabschnitt außerhalb der entsprechenden Lamellenmontagenut liegt, und der Basisabschnitt und ein Teil des Wärmestrahlungsabschnitts nahe des Basisabschnitts in die Lamellenmontagenut eingepasst sind.

7. Wärmestrahlungsvorrichtung für LED-Beleuchtung nach Anspruch 6, wobei der Basisabschnitt von jeder Wärmestrahlungslamelle in Kontakt mit einer unteren Oberfläche der entsprechenden Lamellenmontagenut ist und ein Teil des Wärmestrahlungsabschnitts von jeder Wärmestrahlungslamelle, die in die Lamellenmontagenut eingepasst ist, in Kontakt mit einer Seitenoberfläche der Lamellenmontagenut ist.

8. Wärmestrahlungsvorrichtung für LED-Beleuchtung nach Anspruch 6, wobei die mehreren gewölbten Nuten durch Eindrücken der Wärmetransferoberfläche der Montageplatte für eine LED-Beleuchtungseinrichtung ausgebildet ist, sodass die gewölbten Nuten parallel zueinander werden und jede gewölbten Nut als eine Lamellenmontagenut dient.

9. Wärmestrahlungsvorrichtung für LED-Beleuchtung nach Anspruch 6, wobei mehrere Gratpaare, jedes aus zwei aufwärts hervorstehenden Graten bestehend, in vorbestimmten Abständen an der Wärmetransferoberfläche der Montageplatte für eine LED-Beleuchtung bereitgestellt sind, sodass alle Grate parallel zueinander werden und zwei Grate eines jeden Paars und ein Abschnitt der Montageplatte für eine LED Beleuchtungseinheit, der zwischen zwei Graten von dem Gratpaar liegt, eine Lamellenmontagenut ausbilden.

10. Wärmestrahlungsvorrichtung für LED-Beleuchtung nach Anspruch 6, wobei mehrere nutausbildende Elemente, von denen jedes einen U-förmigen transversalen Querschnitt aufweist, die separat von der Montageplatte für eine LED Beleuchtung unter Verwendung eines thermisch leitenden Materials ausgebildet sind und aus einer flachen Platte hergestellt sind, und ein Paar paralleler Grate, die integral an gegenüberliegenden Seitenkanten der Platte bereitgestellt sind, an der Wärmetransferoberfläche der Montageplatte für eine LED Beleuchtungseinheit in vorbestimmten Abständen fixiert sind, sodass alle Grate parallel zueinander werden und die zwei Grate und eine flache Platte von jedem nutausbildenden Element eine Lamellenmontagenut ausbilden.

11. Wärmestrahlungsvorrichtung für LED-Beleuchtung nach Anspruch 6, wobei der Basisabschnitt von jeder Wärmestrahlungslamelle eine rechteckige Form aufweist, der Wärmestrahlungsabschnitt an jeder der zwei langen Seiten des Basisabschnitts bereitgestellt ist, wodurch die Wärmestrahlungslamelle eine U-ähnliche Form als ein ganzes aufweist und Teile der zwei Wärmestrahlungsabschnitte in der Nähe des Basisabschnitts in der Lamellenmontagenut eingepasst sind.

12. Wärmestrahlungsvorrichtung für LED-Beleuchtung nach Anspruch 11, wobei gewölbte Abschnitte, die sich in einer vorne-hinten Richtung erstrecken, integral an den zwei Seitenoberflächen von jeder Lamellenmontagenut der Montageplatte für eine LED Beleuchtung oder Oberflächen der Teile der zwei Wärmestrahlungsabschnitte von jeder Wärmestrahlungslamelle, die in die Lamellenmontagenuten eingepasst sind, bereitgestellt sind, die Oberflächen Richtung außerhalb der Lamellenmontagenut gewandt sind und gewölbte Abschnitte, die sich in der vorne-hinten Richtung erstrecken, und in welche die gewölbten Abschnitte eingepasst sind, an den zwei Seitenoberflächen der Lamellenmontagenut oder den Oberflächen der Teile der zwei Wärmestrahlungsabschnitte bereitgestellt sind, an welchen die gewölbten Abschnitte nicht bereitgestellt sind.

13. Wärmestrahlungsvorrichtung für LED-Beleuchtung nach Anspruch 3 oder 11, wobei die zwei Wärmestrahlungsabschnitte von jeder Wärmestrahlungslamelle Wärmerohrabschnitte aufweisen, die unabhängig voneinander sind.

14. Wärmestrahlungsvorrichtung für LED-Beleuchtung nach Anspruch 4 oder 13, wobei jede Wärmestrahlungslamelle durch Biegen in eine U-ähnliche Form ausgebildet ist, ein Substrat durch Laminieren und Verbinden zweier Metallplatten hergestellt ist und der Speicherkreislauf für ein Betriebsfluid des Wärmerohrabschnitts von jedem Wärmestrahlungsabschnitt durch Ausbeulen nach außen von mindestens einer der zwei Metallplatten bereitgestellt ist, welche das Substrat ausbilden.

15. Beleuchtungsvorrichtung, die eine Wärmestrahlungsvorrichtung für LED-Beleuchtung nach einem der Ansprüche 1-14 und mehrere LEDs umfasst, die an der Montageoberfläche für eine Beleuchtungseinheit der Montageplatte für eine LED-Beleuchtungseinheit der Wärmestrahlungsvorrichtung für LED Beleuchtung montiert sind und die als eine Lichtquelle dienen.

16. Beleuchtungsvorrichtung nach Anspruch 15, wobei die LED-Beleuchtungseinheit eine Leiterplatte, mehrere blaue LED-Pakete, die an der Leiterplatte angeordnet sind und jeweils eine blaue LED beinhalten, mehrere rote LED-Pakete, die an der Leiterplatte angeordnet sind und jeweils eine rote LED beinhalten, und ein Schaltleistungsquelle für die LED-Pakete beinhaltet, und die LED-Beleuchtungseinheit an der Montageoberfläche für eine Beleuchtungseinheit der Montageplatte für eine LED Beleuchtungseinheit montiert ist, sodass jedes LED-Paket direkt unter dem Basisabschnitt der entsprechenden Wärmestrahlungslamelle liegt.

## Revendications

1. Appareil de rayonnement de chaleur (1) pour éclairage DEL, comprenant :
une plaque de montage d'unité d'éclairage DEL (2 ; 30 ; 35 ; 40 ; 45) qui est formée d'un matériau thermiquement conducteur et qui comporte une surface de montage d'unité d'éclairage (3) sur laquelle une unité d'éclairage DEL (6) est montée et une surface de transfert de chaleur plate (4) ; et
une pluralité d'ailettes de rayonnement de chaleur (5 ; 20) disposées sur la surface de transfert de chaleur (4) de la plaque de montage d'unité d'éclairage DEL (2 ; 30 ; 35 ; 40 ; 45), dans lequel :
chacune des ailettes de rayonnement de chaleur (5 ; 20) comporte une portion de base (7) et une portion de rayonnement de chaleur (8) aménagée d'un seul tenant sur la portion de base (7) de telle sorte que la portion de rayonnement de chaleur (8) s'étende vers le haut de la portion de base (7) ;
la pluralité d'ailettes de rayonnement de chaleur (5 ; 20) sont fixées à la plaque de montage d'unité d'éclairage DEL (2 ; 30 ; 35 ; 40 ; 45) de telle sorte que les portions de rayonnement de chaleur (8) soient espacées les unes des autres ; et
un circuit de stockage de fluide de travail creux (12 ; 22) est formé dans la portion de rayonnement de chaleur (8) de chaque ailette de rayonnement de chaleur (5 ; 20) et un fluide de travail est chargé dans le circuit de stockage de fluide de travail (12 ; 22), de sorte qu'une portion de tube de chauffe (11 ; 21) soit prévue sur la portion de rayonnement de chaleur (8).

2. Appareil de rayonnement de chaleur pour éclairage DEL selon la revendication 1, dans lequel la portion de base de chaque ailette de rayonnement de chaleur présente une forme rectangulaire et une surface plate en regard de la plaque de montage d'unité d'éclairage DEL , la portion de rayonnement de chaleur est prévue sur au moins l'un des deux longs côtés de la portion de base et chaque ailette de rayonnement de chaleur est fixée à la plaque de montage d'unité d'éclairage DEL par une fixation qui pénètre dans la portion de base de l'ailette de rayonnement de chaleur.

3. Appareil de rayonnement de chaleur pour éclairage DEL selon la revendication 2, dans lequel la portion de rayonnement de chaleur de chaque ailette de rayonnement de chaleur est située sur chacun des deux longs côtés de la portion de base et l'ailette de rayonnement de chaleur présente une forme en U dans son ensemble.

4. Appareil de rayonnement de chaleur pour éclairage DEL selon la revendication 3, dans lequel les deux portions de rayonnement de chaleur de chaque ailette de rayonnement de chaleur comportent des portions de tube de chauffe et les circuits de stockage de fluide de travail des portions de tube de chauffe des deux portions de rayonnement de chaleur communiquent l'un avec l'autre par l'intermédiaire d'une portion de communication creuse ménagée sur la portion de base.

5. Appareil de rayonnement de chaleur pour éclairage DEL selon la revendication 4, dans lequel chaque ailette de rayonnement de chaleur est formée en cintrant, selon une forme en U, un substrat fabriqué en stratifiant et en joignant deux plaques métalliques, le circuit de stockage de fluide de travail de la portion de tube de chauffe de chaque portion de rayonnement de chaleur est obtenu en bombant vers l'extérieur au moins l'une des deux plaques métalliques qui forment le substrat, et la portion de communication creuse de la portion de base est obtenue en bombant seulement l'une des plaques métalliques qui forment le substrat dans un sens opposé à la plaque de montage d'unité d'éclairage DEL .

6. Appareil de rayonnement de chaleur pour éclairage DEL selon la revendication 1, dans lequel une pluralité de rainures de montage d'ailettes sont ménagées sur la surface de transfert de chaleur de la plaque de montage d'unité d'éclairage DEL de telle sorte que les rainures de montage soient espacées les unes des autres, chaque ailette de rayonnement de chaleur est fixée à la plaque de montage d'unité d'éclairage DEL dans un état dans lequel la portion de tube de chauffe est située à l'extérieur de la rainure de montage d'ailette correspondante et la portion de base et une partie de la portion de rayonnement de chaleur proche de la portion de base sont ajustées dans la rainure de montage d'ailette.

7. Appareil de rayonnement de chaleur pour éclairage DEL selon la revendication 6, dans lequel la portion de base de chaque ailette de rayonnement de chaleur est en contact avec une surface inférieure de la rainure de montage d'ailette correspondante et une partie de la portion de rayonnement de chaleur de l'ailette de rayonnement de chaleur ajustée dans la rainure de montage d'ailette est en contact avec une surface latérale de la rainure de montage d'ailette.

8. Appareil de rayonnement de chaleur pour éclairage DEL selon la revendication 6, dans lequel la pluralité de rainures concaves sont formées en comprimant la surface de transfert de chaleur de la plaque de montage d'unité d'éclairage DEL de telle sorte que les rainures concaves soient parallèles les unes aux autres et chaque rainure concave sert de rainure de montage d'ailette.

9. Appareil de rayonnement de chaleur pour éclairage DEL selon la revendication 6, dans lequel une pluralité de paires d'arêtes, chacune composée de deux arêtes en saillie vers le haut, sont aménagées à intervalles prédéterminés sur la surface de transfert de chaleur de la plaque de montage d'unité d'éclairage DEL de telle sorte que toutes les arêtes soient parallèles les unes aux autres, et les deux arêtes de chaque paire d'arêtes et une portion de la plaque de montage d'unité d'éclairage DEL située entre les deux arêtes de cette paire d'arêtes forment une rainure de montage d'ailette.

10. Appareil de rayonnement de chaleur pour éclairage DEL selon la revendication 6, dans lequel une pluralité d'éléments de formation de rainures, dont chacun comporte une section transversale en forme de U, qui sont formés séparément de la plaque de montage d'unité d'éclairage DEL en utilisant un matériau thermiquement conducteur et qui sont composés d'une plaque plate et d'une paire d'arêtes parallèles formées d'un seul tenant sur les bords latéraux opposés de la plaque sont fixés à la surface de transfert de chaleur de la plaque de montage d'unité d'éclairage DEL à intervalles prédéterminés de telle sorte que toutes les arêtes soient parallèles les unes aux autres, et les deux arêtes et la plaque plate de chaque élément de formation de rainure forment une rainure de montage d'ailette.

11. Appareil de rayonnement de chaleur pour éclairage DEL selon la revendication 6, dans lequel la portion de base de chaque ailette de rayonnement de chaleur présente une forme rectangulaire, la portion de rayonnement de chaleur est aménagée sur chacun de deux longs côtés de la portion de base, de sorte que l'ailette de rayonnement de chaleur ait une forme en U dans son ensemble, et des parties des deux portions de rayonnement de chaleur proches de la portion de base sont ajustées dans la rainure de montage d'ailette.

12. Appareil de rayonnement de chaleur pour éclairage DEL selon la revendication 11, dans lequel des portions convexes s'étendant dans le sens avant-arrière sont aménagées d'un seul tenant sur les deux surfaces latérales de chaque rainure de montage d'ailette de la plaque de montage d'unité d'éclairage DEL ou sur les surfaces des parties des deux portions de rayonnement de chaleur de chaque ailette de rayonnement de chaleur ajustée dans la rainure de montage d'ailette, les surfaces étant en regard de de l'extérieur de la rainure de montage d'ailette, et des portions concaves, qui s'étendent dans le sens avant-arrière et dans lesquelles les portions convexes sont ajustées, sont aménagées sur les deux surfaces latérales de la rainure de montage d'ailette ou sur les surfaces des parties des deux portions de rayonnement de chaleur sur lesquelles les portions convexes ne sont pas disposées

13. Appareil de rayonnement de chaleur pour éclairage DEL selon la revendication 3 ou 11, dans lequel les deux portions de rayonnement de chaleur de chaque ailette de rayonnement de chaleur comportent des portions de tube de chauffe qui sont indépendantes l'une de l'autre.

14. Appareil de rayonnement de chaleur pour éclairage DEL selon la revendication 4 ou 13, dans lequel chaque ailette de rayonnement de chaleur est formée en cintrant, en forme de U, un substrat fabriqué en stratifiant et en joignant deux plaques métalliques, et le circuit de stockage de fluide de travail de la portion de tube de chauffe de chaque portion de rayonnement de chaleur est aménagé en bombant vers l'extérieur au moins l'une des deux plaques métalliques qui forment le substrat.

15. Appareil d'éclairage comprenant un appareil de rayonnement de chaleur pour éclairage DEL selon l'une quelconque des revendications 1 à 14 et une pluralité de DEL qui sont montées sur la surface de montage d'unité d'éclairage de la plaque de montage d'unité d'éclairage DEL de l'appareil de rayonnement de chaleur pour éclairage DEL et qui servent de source de lumière.

16. Appareil d'éclairage selon la revendication 15, dans lequel l'unité d'éclairage DEL comprend une carte de circuits imprimés, une pluralité de boîtiers de DEL bleue disposés sur la carte de circuits imprimés et comprenant chacun une DEL bleue, une pluralité de boîtiers de DEL rouge disposés sur la carte de circuits imprimés et comprenant chacun une DEL rouge et une alimentation électrique à commutation pour les boîtiers de DEL et l'unité d'éclairage DEL est montée sur la surface de montage d'unité d'éclairage de la plaque de montage d'unité d'éclairage DEL de telle sorte que chaque boîtier de DEL soit situé juste en dessous de la portion de base de l'ailette de rayonnement de chaleur correspondante.
